Europäisches Patentamt

European Patent Office

Office européen des brevets

(19)

(11) EP 0 651 263 B1

(12) FASCICULE DE BREVET EUROPEEN

(45) Date de publication et mention
de la délivrance du brevet:
**17.02.1999 Bulletin 1999/07**

(51) Int Cl.6: **G01S 13/22**

(21) Numéro de dépôt: **94402450.4**

(22) Date de dépôt: **28.10.1994**

(54) **Procédé de détermination du rang d'ambiguité en distance d'échos radar**

Verfahren zur Bestimmung der Rangstufe der Mehrdeutigkeit der Entfernung von Radarechos

Method for determining the order of range ambiguity of radar echoes

(84) Etats contractants désignés:
DE ES FR GB SE

(30) Priorité: **02.11.1993 FR 9312997**

(43) Date de publication de la demande:
**03.05.1995 Bulletin 1995/18**

(73) Titulaire: **THOMSON-CSF**
**75008 Paris (FR)**

(72) Inventeur: **Carrara, Bruno**
**F-92402 Courbevoie Cédex (FR)**

(74) Mandataire: **Benoit, Monique et al**
**Thomson-CSF Propriété Intellectuelle,**
**13, Avenue du Président Salvador Allende**
**94117 Arcueil Cédex (FR)**

(56) Documents cités:
**EP-A- 0 073 706          EP-A- 0 089 284**
**EP-A- 0 336 273          WO-A-88/00355**
**FR-A- 2 596 873          GB-A- 2 260 456**

**Description**

La présente invention concerne un procédé de détermination du rang d'ambiguïté en distance d'échos radar. Elle s'applique notamment à des radars de surveillance et aussi éventuellement à des radars de poursuite, fonctionnant, en basse, moyenne ou haute fréquence de récurrence par exemple.

Un radar émet généralement des rafales d'impulsions constituant des séquences de récurrences, chaque récurrence étant constituée d'une impulsion suivie d'une durée d'écoute, une séquence, comprenant par exemple quelques récurrences à plusieurs dizaines de récurrences. Pour un radar fonctionnant jusqu'à une distance D donnée, on détermine généralement l'énergie nécessaire pour atteindre la plus petite cible donnée à laquelle on s'intéresse à cette distance D donnée. Cette distance D définit la durée T d'une récurrence par la relation D = c T/2 où c représente la célérité des ondes hyperfréquence. Certaines cibles plus grosses que la plus petite cible donnée précitée situées à des distances supérieures à la distance D donnée peuvent renvoyer un écho d'énergie suffisante pour être détecté par le radar. Or, cet écho n'apparaît alors pas dans la première récurrence d'une séquence, car le temps de propagation aller-retour du signal radar dépasse la durée T d'une séquence, mais à partir de la deuxième récurrence, voire dans une récurrence de rang supérieur. Le traitement radar peut alors considérer à tort que la cible se situe à l'intérieur de la distance D donnée précitée, c'est le phénomène connu de l'ambiguïté en distance des échos radar.

Dans le fonctionnement d'un radar, les échos ambigus en distance nécessitent un traitement particulier. Dans le cas d'échos fixes indésirables, des impulsions sont ajoutées au séquencement radar de manière à initialiser l'entrée du filtrage Doppler correctement jusqu'à la plus grande distance supposée des échos parasites, les premières récurrences n'étant pas traitées. Ces impulsions supplémentaires consomment du temps radar sans profiter au bilan de détection des cibles utiles présentes dans la première ou les premières récurrences non traitées.

Dans le cas d'échos mobiles, que leur détection soit souhaitée ou non, cette méthode est inefficace et il est nécessaire de mettre en oeuvre un critère de levée d'ambiguïté en distance qui est généralement fondé sur l'utilisation de plusieurs rafales d'impulsions émises avec des périodes de récurrences différentes. Les échos correspondant alors aux cibles situées à une distance supérieure à la distance D donnée sont vus d'une séquence à l'autre à une distance différente contrairement aux cibles à une distance inférieure à la distance D donnée, ce qui permet de lever l'ambiguïté. Cependant, cette deuxième solution est encore coûteuse en temps radar.

Le but de l'invention est de pallier les inconvénients précités en permettant de lever l'ambiguïté en distance des échos radar sans nécessiter de temps radar supplémentaire.

A cet effet, l'invention a pour objet un procédé de détermination du rang d'ambiguïté en distance d'échos radar à l'intérieur d'une séquence comprenant un nombre N donné de récurrences, caractérisé en ce qu'il consiste dans une première étape à effectuer une prédiction rétrograde d'un écho pour les P premières récurrences à partir des échos reçus dans les Q dernières récurrences, dans une deuxième étape à comparer les échos effectivement reçus dans les P premières récurrences avec l'écho prédit et dans une troisième étape à déterminer le rang d'ambiguïté en distance en fonction du résultat de la comparaison de la deuxième étape, le rang d'ambiguïté d'un écho étant l'entier immédiatement supérieur au rang le plus élevé des premières récurrences où la différence entre l'écho prédit et l'écho effectivement reçu dépasse un seuil au moins égal au bruit de prédiction multiplié par un facteur de réglage.

L'invention a pour principaux avantages qu'elle permet de traiter des superpositions d'échos composites, ambigus et non ambigus, fixes et mobiles par exemple, qu'elle s'adapte à de nombreux types de radar et qu'elle est simple à mettre en oeuvre.

D'autres caractéristiques et avantages de l'invention apparaîtront à l'aide de la description qui suit, faite en regard de dessins annexés qui représentent :

- la figure 1, une séquence de récurrences radar ;
- la figure 2, une séquence de récurrences radar comportant un écho ambigu en distance ;
- la figure 3, une illustration des étapes possibles du procédé selon l'invention ;
- la figure 4, une illustration d'un exemple de prédiction rétrograde d'échos à partir des dernières récurrences d'une séquence.

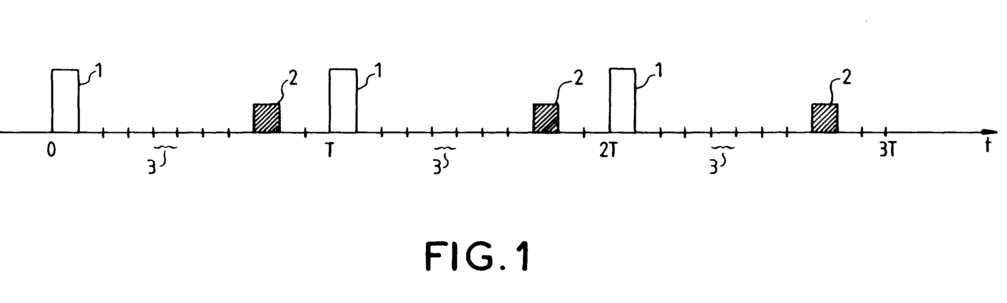

La figure 1 représente, en fonction du temps t, une séquence comportant à titre d'exemple trois récurrences. Chaque récurrence, de durée T, est constituée d'une impulsion 1 suivie d'une zone d'écoute durant jusqu'à l'impulsion suivante. Une cible non ambiguë en distance, c'est à dire située à une distance inférieure à la distance D précitée, provoque un écho 2 qui apparaît dès la première récurrence comprise entre l'instant initial 0 de la séquence et l'instant T, où D = c T/2.

Les échos subissent par exemple un filtrage Doppler afin d'éliminer ceux d'entre eux qui sont parasites, notamment fixes, la somme des coefficients du filtre étant par exemple nulle. Pour une séquence de n récurrences, un tel filtre peut se formuler par la relation suivante :

$$F_D = \sum_{i=1}^{n} a_i \, s_i \qquad (1)$$

où pour une case distance donnée 3 de la ième récurrence, $s_i$ représente le signal complexe, amplitude et phase de l'écho reçu, et $a_i$ le coefficient associé à la case distance donnée de la ième récurrence, la somme des coefficients des n récurrences correspondant à la même case distance étant nulle, soit

$$\sum_{i=1}^{n} a_i = 0$$

Dans le cas d'un écho parasite fixe, du fouillis par exemple, $s_i$ est constante, il s'ensuit que $F_D = 0$ et que l'écho parasite peut alors être éliminé par ce filtrage Doppler.

Dans le cas d'une cible mobile, le signal reçu $s_i$ s'exprime par la relation suivante :

$$s_i = c\, e^{j\varphi_i} \qquad (2),$$

où $\varphi_i$ est la phase Doppler qui varie d'une récurrence à l'autre. Il en résulte que

$$\sum_{i=1}^{n} a_i\, s_i \neq 0 \quad,$$

ce qui permet de bien distinguer ces cibles des cibles parasites précitées et de ne pas les éliminer.

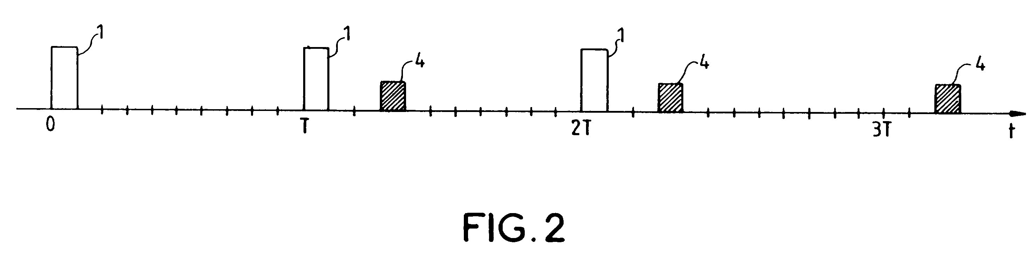

La figure 2 présente, dans le cas de la séquence précédente, un exemple où un écho 4 est envoyé par une cible située à une distance supérieure à la distance D précitée. Dans ce cas, en réponse à l'impulsion de la première récurrence, la cible envoie un écho 4 reçu au bout d'un temps supérieur à la période T des récurrences. Il arrive par exemple dans la deuxième récurrence. En appliquant à cet écho 4 le filtrage Doppler défini par la relation (1) précédente, il s'ensuit que le résultat du filtrage $F_D$ est non nul, même si la cible est fixe car dans ce cas $s_i$ n'est pas constante dans toute les récurrences, puisque l'écho n'apparaissant pas dans la première récurrence, le premier échantillon s1 est nul alors que les échantillons suivants sonts non nuls.

Selon l'invention, une méthode de prédiction des signaux reçus est utilisée, par exemple du type de celles utilisées pour les analyses spectrales à haute résolution, pour estimer le signal qui devrait être présent dans une récurrence donnée à partir des signaux effectivement reçus dans les dernières récurrences de la séquence. En effet, en fin de séquence tous les signaux sont présents, même ceux 4 des objets ambigus en distance. Ces dernières récurrences permettent alors, pour une case distance donnée, de modéliser tous les échos de cette case, donc d'élaborer une prédiction, cette dernière étant du type rétrograde puisqu'elle est réalisée pour les premiers échantillons à partir des derniers échantillons.

Les méthodes d'analyse spectrale à haute résolution, basées sur l'hypothèse que le signal reçu obéit à un modèle déterminé, un modèle auto-régressif par exemple, peuvent par exemple être utilisées car elles semblent notamment bien adaptées à de nombreux signaux radar tels que ceux provenant de cibles ou de fouillis par exemple. Un modèle auto-régressif, connu de l'homme du métier, est un modèle où le signal est représenté par un bruit blanc filtré par un filtre ne présentant que des pôles dont le module est inférieur à 1. L'analyse spectrale consiste alors à adapter les paramètres du modèle, le nombre et la position des pôles dans le cas d'utilisation d'un modèle auto-régressif par exemple, ces paramètres étant adaptés à partir des échantillons disponibles, les échos des dernières récurrences, de manière à minimiser l'écart entre le signal prédit par le modèle et le signal effectivement reçu. La comparaison du signal estimé au signal effectivement reçu permet de déceler l'absence d'un des échos dans les premières récurrences et de déterminer ainsi qu'il est ambigu en distance.

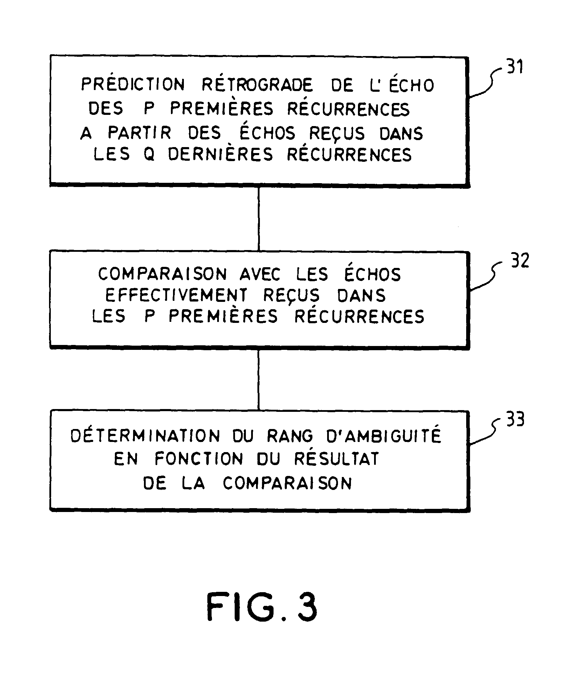

La figure 3 illustre les étapes possibles du procédé selon l'invention. Une séquence ou rafale comprenant N récurrences, et l'ambiguïté en distance étant estimée ne pas avoir lieu pour les Q dernières récurrences, le procédé selon l'invention consiste dans une première étape 31 à prédire, pour chaque case distance donnée par exemple, les échos des P premières récurrences à partir des Q dernières récurrences, P + Q étant inférieur ou égal à N et de préférence égal à N. Dans cette première étape 31, le procédé selon l'invention consiste donc à prédire le signal attendu dans la première, deuxième et jusqu'à la pième récurrence de la séquence à partir des signaux reçus dans les Q dernières récurrences de la séquence, selon par exemple une analyse haute résolution, le sens de la prédiction étant simplement inversé puisque le passé est prédit à partir des signaux, les échos, de la fin de la récurrence, ces derniers étant par exemple préalablement mémorisés pour permettre l'élaboration de cette prédiction.

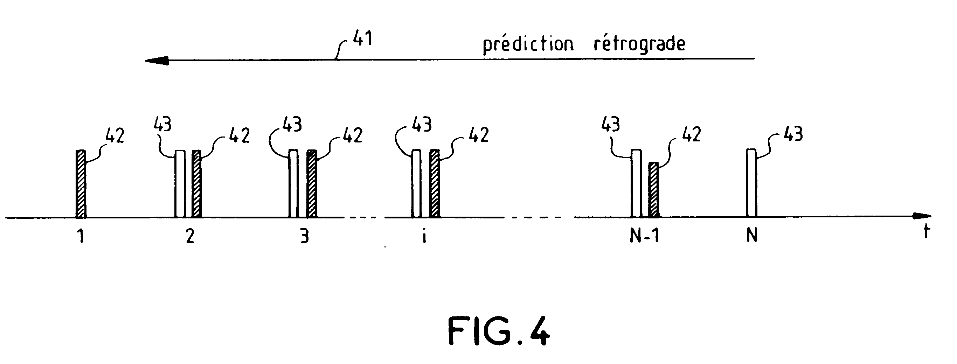

La figure 4 illustre cette prédiction, une flèche 41 inverse du sens du temps t symbolisant sa rétrogradation.

Les nombres situés sous l'axe des temps t indiquent l'ordre des récurrences successives de la séquence représentée. Les échos hachurés 42 représentent les échos prédits à partir des échos effectivement reçus 43. La Nième récurrence ne contient évidemment pas d'écho prédit. La N-1ième récurrence contient un écho prédit 42 normalement encore éloigné de l'écho effectivement reçu 43 par manque d'échantillons postérieurs nécessaires à une prédiction rétrograde. Plus les récurrences s'approchent des premières, meilleure devient la prédiction.

Revenant à la figure 3, la première étape 31 du procédé selon l'invention est suivie par une deuxième étape 32 dans laquelle les échos prédits 42 pour les P premières récurrences sont comparés successivement avec les échos reçus dans ces P premières récurrences, par exemple pour chaque case distance. Pour établir cette comparaison, l'écho prédit est par exemple retranché de manière cohérente aux échos effectivement reçus, le signal qui résulte de cette soustraction tenant notamment compte du bruit de prédiction pour toutes les récurrences testées.

La deuxième étape 32 est suivie d'une troisième étape 33 de détermination du rang d'ambiguïté à partir des résultats de la comparaison effectuée dans la deuxième étape 32.

Ainsi, les tests s'effectuant au niveau des cases distances, si la case distance considérée ne contient que des échos de cibles dont la distance est inférieure à la distance D donnée précitée, appelés échos de première trace, le résultat de la soustraction cohérente est égal au bruit de prédiction pour toutes les récurrences testées. Si un écho de cible comprise entre les distances D et 2D, dit écho de deuxième trace, fixe ou mobile, est présent dans les Q dernières récurrences, le résultat de la soustraction sera égal à l'écho de deuxième trace prédit pour la première récurrence, et au bruit de prédiction pour les récurrences suivantes.

La figure 4 illustre un tel cas. La soustraction entre l'écho prédit 42 et l'écho effectivement reçu dans la première récurrence est égal à cet écho prédit, au bruit de prédiction près non représenté, car l'écho effectivement reçu n'apparaît pas dans cette première récurrence mais à partir de la deuxième récurrence comme l'illustre l'exemple de la figure 4. Cet écho est ambigu en distance.

Si un écho de cible comprise entre 2D et 3D, dit de troisième trace, fixe ou mobile, est présent, le résultat de la soustraction est, pour les deux premières récurrences, égal à l'écho de troisième trace prédit et égal au bruit de prédiction pour les récurrences suivantes, et ainsi de suite.

La comparaison du résultat de la soustraction cohérente à un seuil permet ainsi la détermination du rang d'ambiguïté en distance de l'écho reçu. Ce rang est l'entier immédiatement supérieur au rang de la récurrence de rang le plus élevé pour laquelle le seuil est dépassé.

Dans l'exemple de la figure 4, le rang de la récurrence de rang le plus élevé est 1, donc le rang d'ambiguïté en distance est 2, ce qui signifie qu'il s'agit d'un écho dit de deuxième trace, le rang d'ambiguïté indiquant le rang de la trace. La comparaison précitée avec un seuil peut se faire de façon quadratique par exemple, le seuil étant franchi quand le résultat de la soustraction est au moins supérieur au bruit de prédiction multiplié par exemple pour un facteur de réglage K, ce qui est bien le cas si ce résultat est égal à l'état prédit. Le seuil n'est pas franchi quand le résultat est égal au bruit de prédiction et qu'il résulte de la soustraction de l'écho prédit à l'écho effectivement reçu, ce dernier étant bien présent dans la récurrence. Le seuil doit au moins être égal au bruit de prédiction. Le facteur multiplicatif K, permet d'ajuster, pour une application du procédé à un radar donné, les probabilités de détermination et de fausse alarme de la comparaison par exemple. Le facteur de réglage K peut par exemple être égal à 1.

Le nombre Q de récurrences utilisées pour les prédictions est par exemple déterminé par la durée de la séquence et par le plus grand rang d'ambiguïté attendu des échos reçus. Pour chaque application, ce nombre Q est par exemple choisi aussi grand que possible afin de modéliser au mieux des signaux composites tels que mélanges d'échos fixes et mobiles, échos de rangs d'ambiguïté différents, ou à spectre élargi tels que le fouillis de pluie ou de mer par exemple.

Le procédé peut par exemple être appliqué après le traitement radar habituel sur les cases distances ayant provoqué une détection.

En cas d'utilisation d'une méthode dérivée de l'analyse spectrale haute résolution pour la prédiction rétrograde des échos des premières récurrences, le procédé selon l'invention fournit en plus de la détermination du rang d'ambiguïté en distance, la valeur de la fréquence Doppler de chaque écho présent dans les cases distance. Il est alors possible d'élaborer un critère combiné écho mobile ou fixe et écho ambigu ou non.

Le niveau du seuil de comparaison précité peut par exemple être asservi sur le bruit thermique ambiant.

Le procédé selon l'invention peut par exemple être appliqué à des radars fonctionnant à basses fréquences de récurrence, moyennes fréquences de récurrence et hautes fréquences de récurrence.

## Revendications

1. Procédé de détermination du rang d'ambiguïté en distance d'échos radar à l'intérieur d'une séquence comprenant un nombre N donné de récurrences, caractérisé en ce qu'il consiste dans une première étape (31) à effectuer une prédiction rétrograde d'un écho (42) pour les P premières récurrences à partir des échos reçus dans les Q dernières récurrences, dans une deuxième étape (32) à comparer les échos effectivement reçus (43) dans les P premières récurrences avec l'écho prédit (42) et dans une troisième étape (33) à déterminer le rang d'ambiguïté en distance en fonction du résultat de la comparaison de la deuxième étape (32), le rang d'ambiguïté d'un écho étant l'entier immédiatement supérieur au rang le plus élevé des premières récurrences où la différence entre l'écho prédit (42) et l'écho effectivement reçu dépasse un seuil au moins égal au bruit de prédiction multiplié par un facteur de réglage..

2. Procédé selon la revendication 1, caractérisé en ce que la comparaison entre signaux prédits et signaux reçus s'effectue par une soustraction cohérente.

3. Procédé selon l'une quelconque des revendications précédentes, caractérisé en ce que la somme du nombre P des premières récurrences pour lesquelles l'écho (42) est prédit et du nombre Q des dernières récurrences utilisées pour la prédiction est égale au nombre N de récurrences de la séquence.

4. Procédé selon l'une quelconque des revendications précédentes, caractérisé en ce que le nombre Q des dernières récurrences est fonction du plus grand rang d'ambiguïté attendu des échos reçus.

5. Procédé selon l'une quelconque des revendications précédentes, caractérisé en ce que la prédiction est dérivée d'une méthode de prédiction haute résolution.

6. Procédé selon la revendication 5, caractérisé en ce que la prédiction utilise un modèle d'échos auto-régressif.

7. Procédé selon l'une quelconque des revendications précédentes, caractérisé en ce que le seuil est fonction du bruit thermique ambiant.

8. Procédé selon l'une quelconque des revendications précédentes, caractérisé en ce que le nombre Q des récurrences utilisées pour la prédiction rétrograde est choisi le plus grand possible pour modéliser des signaux composites.

9. Procédé selon l'une quelconques des revendications précédentes, caractérisé en ce qu'il est appliqué après le traitement radar habituel, sur les cases ayant provoqué une détection.

**Patentansprüche**

1. Verfahren zur Bestimmung des Rangs der Mehrdeutigkeit von Radarechos hinsichtlich der Entfernung innerhalb einer Folge von einer gegebenen Anzahl N von Rekurrenzen, dadurch gekennzeichnet, daß es darin besteht, in einem ersten Schritt (31) eine rückwärts gerichtete Vorhersage eines Echos (42) für die P ersten Rekurrenzen ausgehend von den in den Q letzten Rekurrenzen empfangenen Echos durchzuführen, in einem zweiten Verfahrensschritt (32) die tatsächlich in den P ersten Rekurrenzen empfangenen Echos (43) mit dem vorhergesagten Echo (42) zu vergleichen und in einem dritten Schritt (33) den Rang der Mehrdeutigkeit hinsichtlich der Entfernung abhängig vom Ergebnis des Vergleichs im zweiten Verfahrensschritt (32) zu bestimmen, wobei der Rang der Mehrdeutigkeit eines Echos die ganze Zahl ist, die unmittelbar auf die höchste Rangzahl der ersten Rekurrenzen folgt, in denen der Unterschied zwischen dem vorhergesagten Echo (42) und dem tatsächlich empfangenen Echo eine Schwelle überschreitet, die mindestens dem Vorhersagerauschen multipliziert mit einem Regelungsfaktor gleicht.

2. Verfahren nach Anspruch 1, dadurch gekennzeichnet, daß der Vergleich zwischen vorhergesagten und tatsächlich empfangenen Signalen durch eine kohärente Subtraktion erfolgt.

3. Verfahren nach einem beliebigen der vorstehenden Ansprüche, dadurch gekennzeichnet, daß die Summe der Anzahl P der ersten Rekurrenzen, für die das Echo (42) vorhergesagt wird, und der Zahl Q der letzten Rekurrenzen, die für die Vorhersage verwendet werden, der Zahl N von Rekurrenzen der Folge gleicht.

4. Verfahren nach einem beliebigen der vorstehenden Ansprüche, dadurch gekennzeichnet, daß die Zahl Q der letzten Rekurrenzen von dem höchsten erwarteten Rang der Mehrdeutigkeit der empfangenen Echos abhängt.

5. Verfahren nach einem beliebigen der vorstehenden Ansprüche, dadurch gekennzeichnet, daß die Vorhersage aus einer hochauflösenden Vorhersagemethode abgeleitet ist.

6. Verfahren nach Anspruch 5, dadurch gekennzeichnet, daß die Vorhersage ein autoregressives Echomodell verwendet.

7. Verfahren nach einem beliebigen der vorstehenden Ansprüche, dadurch gekennzeichnet, daß die Schwelle vom vorliegenden Wärmerauschen abhängt.

8. Verfahren nach einem beliebigen der vorstehenden Ansprüche, dadurch gekennzeichnet, daß die Zahl Q der für die rückwärts gerichtete Vorhersage verwendeten Rekurrenzen möglichst groß gewählt wird, um das Modell der zusammengesetzten Signale zu bilden.

9. Verfahren nach einem beliebigen der vorstehenden Ansprüche, dadurch gekennzeichnet, daß es nach der üblichen Verarbeitung der Radarsignale in den Entfernungs-Teilbereichen durchgeführt wird, die zu einer Erfassung geführt haben.

**Claims**

1. Method for determining the rank of range ambiguity of radar echoes within a sequence comprising a given number N of recurrences, characterized in that it consists in a first step (31) in making a backward prediction of an echo (42) for the first P recurrences on the basis of the echoes received in the last Q recurrences, in a second step (32) in comparing the echoes actually received (43) in the first P recurrences with the predicted echo (42) and in a third step (33) in determining the rank of range ambiguity as a function of the result of the comparison of the second step (32), the rank of ambiguity of an echo being the integer immediately greater than the highest rank of the first recurrences where the difference between the predicted echo (42) and the echo actually received exceeds a threshold which is at least equal to the prediction noise multiplied by an adjustment factor.

2. Method according to Claim 1, characterized in that the comparison between predicted signals and received signals is performed by coherent subtraction.

3. Method according to either one of the preceding claims, characterized in that the sum of the number P of the first recurrences for which the echo (42) is predicted and of the number Q of the last recurrences used for the prediction is equal to the number N of recurrences of the sequence.

4. Method according to any one of the preceding claims, characterized in that the number Q of the last recurrences is dependent on the largest expected rank of ambiguity of the echoes received.

5. Method according to any one of the preceding claims, characterized in that the prediction is derived from a high-resolution prediction procedure.

6. Method according to Claim 5, characterized in that the prediction uses an auto-regressive model of echoes.

7. Method according to any one of the preceding claims, characterized in that the threshold is dependent on the ambient thermal noise.

8. Method according to any one of the preceding claims, characterized in that the number Q of the recurrences used for the backward prediction is chosen to be as large as possible for modelling composite signals.

9. Method according to any one of the preceding claims, characterized in that it is applied after the usual radar processing to the compartments which have given rise to a detection.

FIG.1

FIG.2

EP 0 651 263 B1

PRÉDICTION RÉTROGRADE DE L'ÉCHO
DES P PREMIÈRES RÉCURRENCES
A PARTIR DES ÉCHOS REÇUS DANS
LES Q DERNIÈRES RÉCURRENCES — 31

COMPARAISON AVEC LES ÉCHOS
EFFECTIVEMENT REÇUS DANS
LES P PREMIÈRES RÉCURRENCES — 32

DÉTERMINATION DU RANG D'AMBIGUITÉ
EN FONCTION DU RÉSULTAT
DE LA COMPARAISON — 33

# FIG. 3

EP 0 651 263 B1

prédiction rétrograde

41

42  43  42  43  42  43  42  43  42  43  43

1   2   3   i   N-1   N   t

# FIG.4